# FASCICULE DE BREVET EUROPEEN

(11) **EP 0 748 287 B1**
(45) Date de publication et mention de la délivrance du brevet: **11.11.1998**
(21) Numéro de dépôt: 95909677.7
(22) Date de dépôt: 07.02.1995
(51) Int. Cl.: B60C 15/00, B60C 15/02

(54) **PNEUMATIQUE AVEC DES BOURRELETS DE STRUCTURE AMELIOREE ET ENSEMBLE D'UN TEL PNEUMATIQUE AVEC UNE JANTE ADAPTEE**
LUFTREIFEN MIT VERBESSERTER STRUKTUR DER WÜLSTE UND EINHEIT VON EINER REIFENFELGE
TYRE WITH BEADS HAVING AN IMPROVED STRUCTURE, AND ASSEMBLY OF SAID TYRE AND A SUITABLE RIM

(30) Priorité: 28.02.1994 FR 9402371
(43) Date de publication de la demande: 18.12.1996
(73) Titulaire: COMPAGNIE GENERALE DES ETABLISSEMENTS MICHELIN - MICHELIN & CIE, 63040 Clermont-Ferrand Cédex (FR)
(72) Inventeur: DRIEUX, Jean-Jacques, F-63530 Volvic (FR); MUHLHOFF, Olivier, F-63100 Clermont-Ferrand (FR)
(74) Mandataire: Devaux, Edmond-Yves
(86) Numéro de dépôt international: EP9500426
(87) Numéro de publication internationale: WO9523073

(56) Documents cités:
- EP-A- 0 077 161
- FR-A- 1 327 810
- FR-A- 2 211 354
- GB-A- 767 378
- LU-A- 71 465
- US-A- 1 919 911
- US-A- 2 868 258

## Description

La présente invention concerne un pneumatique à armature de carcasse radiale et plus particulièrement la structure des bourrelets dudit pneumatique. Elle concerne aussi un ensemble, formé dudit pneumatique et d'une jante, soit monobloc avec sièges inclinés ou non, soit en plusieurs parties dont certaines sont mobiles, et pourvu éventuellement d'un appui de soutien, amovible ou non.

Un pneumatique à armature de carcasse radiale comprend usuellement, et de manière connue, une tringle de renforcement dans chaque bourrelet, tringle autour de laquelle vient s'ancrer par enroulement l'armature de carcasse en formant un retournement. Les caractéristiques de ladite tringle, prises en combinaison avec le profil méridien de la face radialement intérieure du bourrelet et le profil méridien du siège correspondant de jante, assurent ce qu'on appelle le serrage dudit bourrelet sur ladite jante. Le serrage correspond à une certaine compression de la portion de bourrelet comprise entre la tringle et le siège de bourrelet, ledit serrage étant généralement généré par une différence des angles respectivement du siège de bourrelet et du siège de jante et / ou d'une différence des diamètres desdits sièges.

Lorsqu'on utilise un tel pneumatique sur une jante à sièges plats ou inclinés, avec des angles pouvant varier de 0° à 30°, que la jante comporte un fond de jante plat et plusieurs pièces mobiles, qu'elle soit monobloc avec une gorge de montage, que les sièges soient inclinés vers l'intérieur ou vers l'extérieur, la valeur de serrage des bourrelets sur les sièges de jante, nécessaire pour résoudre les problèmes relatifs à la rotation sur jante à la pression normale d'utilisation du pneumatique et conserver une bonne tenue latérale des bourrelets, est devenue si importante que les difficultés de montage de tels pneumatiques sur leurs jantes existent pratiquement dans tous les cas, même parfois avec utilisation de presses de montage.

Si ces presses sont des outils courants, usuels des manufacturiers de pneumatiques ou des constructeurs automobiles, elles ne font pas partie du matériel habituel du garagiste chez lequel il est pourtant usuel de s'adresser lorsque nous sommes en présence d'un problème relatif au pneumatique, par exemple de tourisme.

Afin de faciliter le montage et le démontage d'un pneumatique sur sa jante de montage tout en remédiant aux problèmes de rotation sur jante, de mise en place précise des bourrelets sur les sièges de jante, et d'endurance à la fatigue desdits bourrelets, l'invention propose un pneumatique dont au moins un bourrelet a une structure permettant une modification du serrage du bourrelet en fonction de la tension de l'armature de carcasse et notamment un renforcement de celui-ci lorsque la pression de gonflage s'accroît jusqu'à sa valeur nominale.

Conformément à l'invention, un pneumatique à armature de carcasse radiale, enroulée dans chaque bourrelet à au moins une tringle pour former un retournement, est caractérisé en ce que, monté sur jante et gonflé à sa pression de service, son armature de carcasse, vue en section méridienne, est enroulée dans au moins un bourrelet autour de la tringle enrobée de mélange caoutchouteux, en allant du talon à la pointe dudit bourrelet, le retournement s'étendant dans un profilé de mélange caoutchouteux sous forme de coin délimité par deux côtés issus d'un sommet localisé sous la section de la tringle enrobée, le côté radialement externe faisant, avec une parallèle avec l'axe de rotation passant par ledit sommet, un angle φ₁ aigu, ouvert radialement vers l'extérieur, et le côté radialement interne faisant avec ladite parallèle un angle φ₂ aigu, ouvert radialement vers l'intérieur, le mélange caoutchouteux formant le profilé, axialement adjacent à la tringle, ayant une dureté Shore A supérieure à la (aux) dureté(s) Shore A des mélanges caoutchouteux situés axialement et radialement au dessus de la tringle et du profilé.

Le contour extérieur d'un bourrelet de pneumatique est délimité généralement par trois parois fondamentales :
- une première paroi rectiligne et/ou courbe, destinée à entrer en contact et à prendre appui latéralement avec et sur la paroi, perpendiculaire ou quasiperpendiculaire à l'axe de rotation, d'un élément étranger au pneumatique, élément qui est dans la grande majorité des cas un rebord de jante, axialement à l'extérieur de la jante, mais qui est, dans certains cas, situé axialement à l'intérieur, comme décrit dans les demandes françaises FR-A-2 699 121 et FR-A-2 713 558, publiées après la date de priorité de la présente demande,
- ladite première paroi étant réunie axialement, à l'intérieur ou à l'extérieur, à une paroi dénommée siège de bourrelet, destinée à entrer en contact et prendre appui avec et sur le siège de jante, ledit siège de bourrelet pouvant être incliné par rapport à la direction parallèle à l'axe de rotation ou non incliné, l'inclinaison pouvant être positive ou négative, variable ou non,
- le siège de bourrelet étant alors réuni, du côté opposé à la première paroi, à une troisième paroi généralement courbe et de direction générale perpendiculaire à l'axe de rotation, destinée à entrer en contact, suivant les cas, avec le gaz de gonflage du pneumatique ou avec l'atmosphère ambiant, l'extrémité radialement intérieure de ladite troisième paroi pouvant éventuellement prendre appui latéralement sur une butée qui pourra être une protubérance ou saillie disposée sur le siège de jante.

En langage connu et usuel, la portion de bourrelet, délimitée simultanément par la première paroi du contour de bourrelet et par le siège de bourrelet, est appelée le talon du bourrelet, alors que la portion, délimitée simultanément par la troisième paroi et par le siège de bourrelet, est appelée la pointe du bourrelet.

Il faut entendre par coin un secteur délimité par deux côtés ou rayons, partant du sommet ou centre du secteur, rectilignes ou curvilignes, dont les deux extrémités respectives définissent un troisième côté, opposé au centre, et de forme quelconque.

Préférentiellement, les angles φ₁ et φ₂, que font respectivement les côtés radialement extérieur et intérieur du profilé ou coin avec une parallèle à l'axe de rotation, sont respectivement compris entre 20° et 70° et entre 0° et 30°.

De manière avantageuse, le mélange caoutchouteux formant le profilé ou coin, axialement adjacent à la tringle, aura une dureté Shore A au moins égale à 65 (mesurée selon la norme ASTM D. 67549T).

L'invention présente l'avantage de pouvoir réaliser, dans le cas de pneumatiques de tourisme, des bourrelets présentant peu ou pas de serrage initial, la face radialement intérieure du bourrelet ou siège étant sensiblement dimensionnellement identique à la face en regard du siège de la jante de montage du pneumatique. Par dimensionnellement identique, il faut comprendre que le siège du bourrelet a en tous points les mêmes cotes, par rapport aux trois axes de coordonnées usuels, que la portion en regard du siège de jante.

La tringle enrobée, présentant en section méridienne une section sensiblement circulaire, est avantageusement susceptible d'être animée d'une rotation autour de son axe moyen, et peut être une tringle rigide en torsion, telle qu'est une tringle obtenue par enroulement d'un fil de section quadrilatère ou telle qu'est une tringle obtenue par enroulement d'un ruban métallique de section méridienne droite ou incurvée, cette tringle enrobée rigide en torsion n'étant pas collée au reste du bourrelet. Une autre variante consiste à enrober la tringle d'une mince couche de mélange vulcanisé ayant une dureté Shore A au plus égale à 35. Il faut entendre par axe moyen d'une tringle le cercle qui est le lieu géométrique des centres de gravité des sections méridiennes de ladite tringle.

Préférentiellement, ladite tringle peut être une tringle de type tressé, c'est-à-dire une tringle formée d'une âme autour de laquelle sont enroulés un(des) fil(s) ou câble(s) sur une ou plusieurs couches. Comme connu en soi, la(les) couche(s) de fil(s) ou câble(s) sont susceptibles de tourner autour de l'âme.

La tringle renforçant le bourrelet est surmontée radialement à l'extérieur d'un profilé sensiblement triangulaire en mélange caoutchouteux présentant préférentiellement une dureté Shore A inférieure à 50. L'espace, d'une part axialement adjacent au profilé surmontant radialement la tringle, d'autre part radialement adjacent au profilé ou coin axialement à côté de la tringle, est comblé avec un troisième profilé de mélange caoutchouteux sensiblement de forme triangulaire, ledit mélange présentant aussi une dureté Shore inférieure à 50.

Le retournement d'armature de carcasse peut être sensiblement rectiligne et avoir une longueur sensiblement égale à la longueur des côtés du profilé de caoutchouc sous forme de coin. Il peut être situé à l'intérieur dudit profilé, une partie du profilé étant radialement au dessus du retournement et une partie du profilé étant au dessous du retournement. Ce dernier peut former le côté radialement interne du profilé de caoutchouc. De manière avantageuse, le retournement formera le côté radialement externe du profilé ou coin, étant entendu qu'il faut admettre par convention que le retournement est aussi, dans les deux cas ci-dessus, considéré comme s'étendant dans le profilé.

Que le serrage initial sur jante soit nul ou de valeur donnée, que le retournement soit situé à l'intérieur du profilé ou coin, sur le côté radialement externe, ou sur le côté interne dudit profilé, le déplacement axial de la tringle d'ancrage de l'armature de carcasse, qui peut résulter de la tension de ladite armature, tension due, par exemple, à la pression de gonflage du pneumatique, permet, en combinaison avec la disposition axiale du profilé caoutchouteux renforcé par le retournement, l'obtention d'un serrage de la pointe du bourrelet sur le siège de jante. La valeur de ce serrage est croissante en fonction de l'effort de tension subi par l'armature de carcasse et peut devenir très importante dans le cas de tension élevée, par exemple lorsqu'un des flancs du pneumatique est mis sous forte tension par un effort transversal.

Il est connu, par le brevet US 3 301 303 de la demanderesse, un pneumatique dont l'armature de carcasse est enroulée autour d'une tringle en allant de la pointe au talon du bourrelet et tel que le retournement repose partiellement et radialement à l'extérieur sur une deuxième tringle située axialement à l'extérieur. Cette deuxième tringle, en combinaison avec le profil méridien du retournement, est nécessaire pour éviter le déroulement de l'armature de carcasse, en particulier dans le cas de bourrelets endommagés par la chaleur. La section de ladite deuxième tringle est radialement incompressible et ne permet pas la transmission des efforts radiaux sur le siège de jante.

Préférentiellement, le retournement d'armature de carcasse aura une longueur telle qu'il sera en contact avec le périmètre total du profilé ou coin ; il formera ainsi les deux côtés radialement externe et interne du profilé de caoutchouc ainsi que le côté opposé au sommet ou centre dudit profilé, et son extrémité sera située axialement au delà du point d'intersection des deux côtés externe et interne. La partie du retournement immédiatement adjacente à la partie dudit retournement enroulée autour de la tringle, peut former en premier lieu le côté radialement externe du profilé ou coin puis ensuite le côté opposé au sommet dudit profilé, puis en dernier lieu le côté radialement interne dudit profilé pour se terminer au delà du point de jonction des deux côtés externe et interne. Elle peut aussi former d'abord le côté radialement interne du profilé ou coin, puis le côté opposé au sommet dudit profilé, puis en dernier lieu le côté radialement externe dudit profilé pour se terminer de la même manière que précédemment. Avantageusement, l'extrémité du retournement d'armature de carcasse sera radialement plus éloignée de l'axe de rotation que le centre de gravité de la section de la tringle enrobée.

L'invention s'applique quelle que soit l'inclinaison du siège de bourrelet, mais elle est particulièrement bénéfique dans le cas de sièges inclinés vers l'extérieur du pneumatique, les pointes de bourrelet étant alors à l'extérieur.

L'invention sera mieux comprise à l'aide du dessin annexé à la description, illustrant des exemples non limitatifs d'exécution de pneumatiques conformes à l'invention, et qui, associés à des jantes adaptées, forment des ensembles pneumatique-jante performants. Sur ledit dessin,
- la figure 1 représente schématiquement un bourrelet de pneumatique, selon une première variante conforme à l'invention et monté sur un siège de jante dit incliné vers l'extérieur,
- la figure 2 représente schématiquement un bourrelet de pneumatique, selon une deuxième variante conforme à l'invention et monté sur un siège identique au précédent,
- la figure 3 représente un bourrelet de pneumatique selon une troisième variante conforme à l'invention et monté sur un siège de jante incliné vers l'intérieur avec un angle d'inclinaison de 5° ± 1°,
- la figure 4 représente schématiquement un ensemble formé par un pneumatique et une jante dite monobloc à sièges inclinés à 15° ± 1°,
- la figure 5 représente schématiquement un ensemble formé par un pneumatique, une jante monobloc avec des sièges dissymétriques et un appui de soutien de bande de roulement,
- la figure 6 représente schématiquement un ensemble formé par un pneumatique conforme à l'invention, une jante dite en trois parties et un appui de soutien de bande de roulement,
- la figure 7 représente schématiquement un ensemble formé par un pneumatique conforme à l'invention, une jante en trois parties selon une deuxième variante, et un appui de soutien,
- la figure 8 représente une variante de l'ensemble tel que montré sur la figure 7.

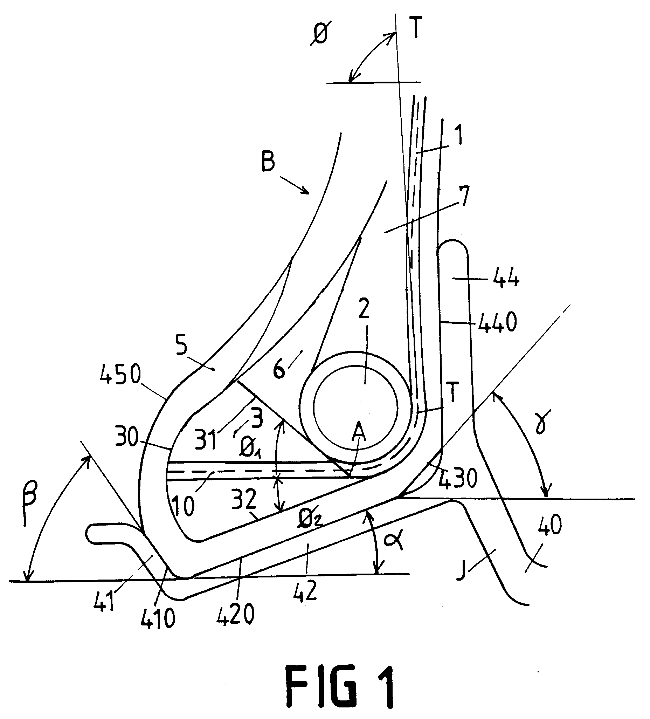

Le bourrelet B du pneumatique de tourisme, montré sur la figure 1 et conforme à l'invention, comprend une tringle (2) de type "tressé" enrobée autour de laquelle vient s'enrouler une armature de carcasse (1), composée, dans l'exemple montré, d'une seule nappe de câbles textiles, en formant un retournement (10). Le profil méridien de la fibre moyenne de l'armature de carcasse (1) (en pointillés) est tangent à la tringle (2) enrobée en un point T, et ladite tangente (TT') fait avec une parallèle à l'axe de rotation du pneumatique un angle ø, ouvert radialement et axialement vers l'extérieur, égal à 85°. Le contour du bourrelet B comprend, axialement à l'intérieur, une paroi (440) sensiblement perpendiculaire à l'axe de rotation et prenant appui latéralement sur le rebord axialement intérieur (44) de la jante J de montage. Cette jante est une jante telle que décrite dans la demande française No 92/15061 non publiée, c'est-à-dire présentant la particularité d'avoir au moins un siège de jante incliné vers l'extérieur, ledit siège étant prolongé axialement à l'intérieur soit par un rebord de jante soit par le fond de jante sur lequel est posé un appui de soutien de bande de roulement, une face latérale dudit appui étant utilisée comme rebord de jante. Ledit siège est prolongé axialement à l'extérieur par une saillie ou hump de faible hauteur. La paroi (440) du bourrelet B est prolongée axialement à l'extérieur par une génératrice tronconique (430), faisant avec une parallèle à l'axe de rotation un angle γ de 45° ouvert axialement vers l'intérieur et radialement vers l'extérieur. Ladite génératrice (430) est elle-même prolongée axialement à l'extérieur par une seconde génératrice tronconique (420) de siège de bourrelet faisant avec la direction de l'axe de rotation un angle α égal à 15°, ouvert axialement vers l'intérieur et radialement vers l'extérieur. Ladite génératrice est dite inclinée vers l'extérieur, son extrémité axialement extérieure étant sur un cercle de diamètre inférieur au diamètre du cercle sur lequel se trouve son extrémité axialement intérieure. Une génératrice tronconique (410), prolongeant axialement à l'extérieur la génératrice (420) et faisant avec la direction de l'axe de rotation un angle β égal à 45°,ouvert axialement et radialement vers l'extérieur, complète le contour de la base du bourrelet B. La paroi (450), courbe dans l'exemple décrit et d'orientation générale sensiblement perpendiculaire à la direction de l'axe de rotation de la jante, complète le contour du bourrelet B. Alors que la génératrice (420) prendra appui sur le siège de jante (42), incliné vers l'extérieur, la génératrice (410) prendra appui sur la paroi axialement intérieure de la saillie ou hump (41) de la jante J, inclinée du même angle β que la génératrice (410). La portion de bourrelet, adjacente à la paroi (440) et à la génératrice (420), constitue, vue en section méridienne, le talon du bourrelet B. La portion de bourrelet, adjacente à la génératrice (420), à la génératrice (410) et partiellement à la paroi (450), constitue la pointe du bourrelet B. L'armature de carcasse (1) est enroulée autour de la tringle enrobée (2) en allant du talon à la pointe du bourrelet B, pour former un retournement (10), sensiblement rectiligne et qui se situe à l'intérieur d'un profilé (3), disposé axialement à l'extérieur de la tringle d'ancrage (2) de l'armature de carcasse (1). Ce profilé (3) se présente sous la forme d'un secteur sensiblement circulaire avec un sommet ou centre A situé radialement sous la tringle (2), deux côtés ou rayons (31) et (32) partant dudit sommet A, et un troisième côté (30), opposé au sommet A. Le côté ou rayon radialement extérieur (31) fait avec une parallèle à l'axe de rotation un angle ø₁ égal à 45°, alors que le côté ou rayon radialement intérieur (32) fait avec la même parallèle un angle ø₂ égal à 15°. Ce profilé (3), complété axialement à l'extérieur par le côté sensiblement circulaire (30), est fait d'un mélange caoutchouteux ayant dans l'état vulcanisé une dureté Shore A égale à 94. La tringle (2) enrobée est surmontée radialement à l'extérieur d'un profilé (7) de mélange caoutchouteux de dureté Shore A égale à 37. Radialement à l'extérieur du profilé (3) et axialement à l'extérieur dudit profilé (7) est disposé un troisième profilé (6) en mélange caoutchouteux ayant une dureté Shore A égale à celle du profilé (7) et donc nettement inférieure à la dureté du mélange du profilé (3), ce qui permet, lors d'un accroissement de tension de l'armature de carcasse, de faciliter le déplacement axial de la tringle tressée (2) vers l'extérieur du bourrelet B et ainsi de créer une compression du profilé (3) et un auto-serrage de la pointe de bourrelet sur la jante J de montage, alors que, dans le cas décrit, le serrage initial du bourrelet J sur ladite jante est nul. Le bourrelet B est complété par le protecteur (5).

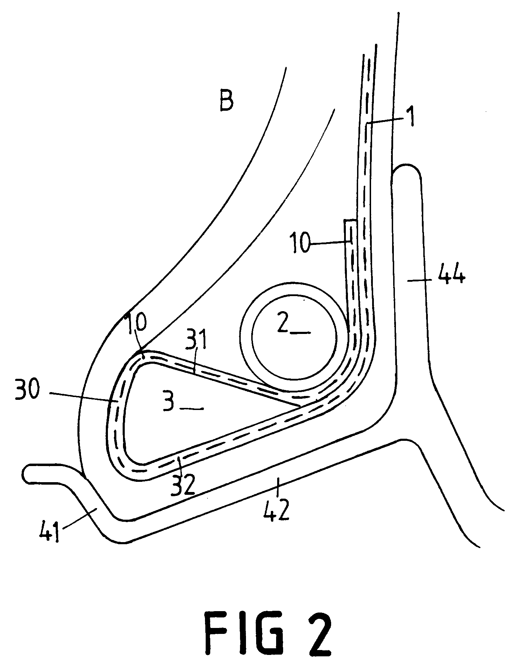

La figure 2 montre la variante d'un bourrelet conforme à l'invention, cette variante se caractérisant par le fait que le retournement (10) de l'armature de carcasse (1) entoure dans sa totalité le contour du profilé (3), en formant premièrement le côté radialement intérieur (32) du profilé (3), deuxièmement le côté latéral (30) axialement extérieur dudit profilé puis dernièrement le côté radialement extérieur (31) du même profilé, pour s'enrouler de nouveau autour de la tringle (2), l'extrémité dudit retournement étant radialement située au dessus de la tringle (2). Ladite extrémité est ainsi avantageusement soustraite aux déformations habituelles auxquelles sont soumises généralement les extrémités de retournements d'armature de carcasse, déformations entraînant une médiocre résistance en endurance des bourrelets.

L'ensemble, formé par un pneumatique conforme à l'invention et une jante, peut comprendre une jante avec deux sièges de jante identiques entre eux et dont les extrémités axialement intérieures sont sur des cercles de diamètres supérieurs aux diamètres des cercles sur lesquels se trouvent les extrémités axialement extérieures, de tels sièges étant montrés sur les figures 1 et 2. L'ensemble pneumatique-jante peut, selon une autre variante, comprendre une jante ayant d'une part un premier siège comme défini ci-dessus et dit incliné vers l'extérieur et d'autre part un deuxième siège dit incliné vers l'intérieur, l'extrémité axialement intérieure dudit siège étant sur un cercle de diamètre inférieur au diamètre du cercle sur lequel se trouve l'extrémité axialement extérieure. Le pneumatique dudit ensemble comprend de manière évidente des bourrelets de forme adaptée à la forme des sièges de jante.

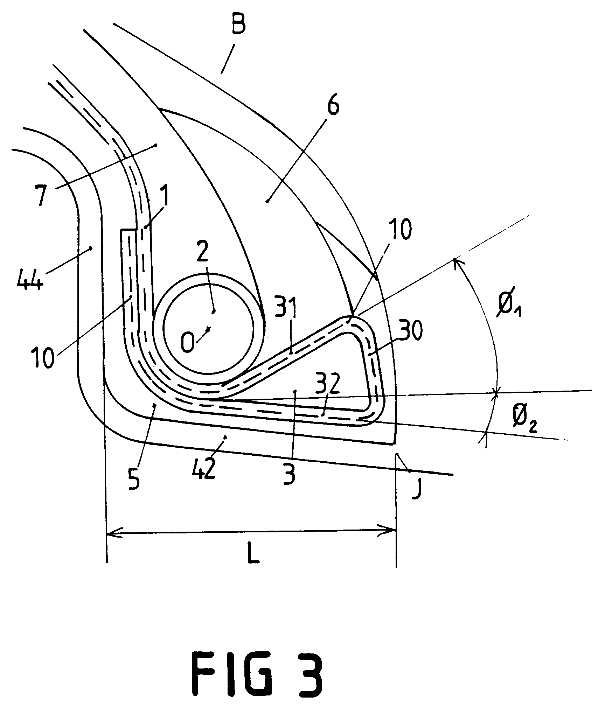

L'ensemble pneumatique-jante peut aussi comprendre une jante dont les deux sièges (42) sont inclinés vers l'intérieur, l'extrémité axialement intérieure de chaque siège (42) étant sur un cercle de diamètre inférieur au diamètre du cercle sur lequel se trouve l'extrémité axialement extérieure, lesdits sièges (42) étant réunis axialement à l'extérieur à deux rebords (44). La figure 3 montre un bourrelet B, selon une troisième variante conforme à l'invention, apte à être monté sur un siège de jante (42), incliné vers l'intérieur et réuni axialement à l'extérieur à un rebord de jante (44). Le talon du bourrelet B est alors situé axialement à l'extérieur tandis que la pointe dudit bourrelet est axialement à l'intérieur, le ou les rebords de jante (44) étant alors situés axialement à l'extérieur de la jante J. Dans l'exemple montré, le centre de la section méridienne de la tringle (2) enrobée est située dans la partie axialement extérieure du bourrelet B, ou si l'on appelle L la largeur du bourrelet B, ledit centre O est séparé de la paroi intérieure du rebord de jante (44) d'une distance au plus égale à la moitié de L. C'est axialement à l'intérieur que se trouve le profilé (3) de mélange caoutchouteux, qui présente la même forme que les profilés décrits précédemment, bien que les angles que font les côtés ou rayons (31) et (32) ont été adaptés au bourrelet envisagé. Le côté radialement extérieur (31) fait avec une parallèle à l'axe de rotation un angle ø₁ égal à 30°, alors que le côté radialement intérieur (32) fait avec la même parallèle un angle ø₂ égal à 5°. Le profilé (3) est fait, comme précédemment, de mélange caoutchouteux vulcanisé ayant une dureté Shore A égale à 94. Les profilés de mélange de caoutchouc (6) et (7) qui, respectivement, sont disposés radialement à l'extérieur du profilé (3) et radialement à l'extérieur de la tringle (2) sont semblables aux profilés (6) et (7) décrits dans la partie de description se rapportant aux figures 1 et 2. Dans cet exemple, le profil méridien du retournement d'armature de carcasse est cependant différent des profils décrits précédemment ; en effet, le retournement (10) de l'armature de carcasse (1) entoure dans sa totalité le contour du profilé (3), en formant premièrement le côté radialement extérieur (31) du profilé (3), deuxièmement le côté latéral (30) axialement extérieur dudit profilé puis dernièrement le côté radialement intérieur (32) du même profilé, pour s'enrouler de nouveau autour de la tringle (2), l'extrémité dudit retournement étant toujours radialement située au dessus de la tringle (2).

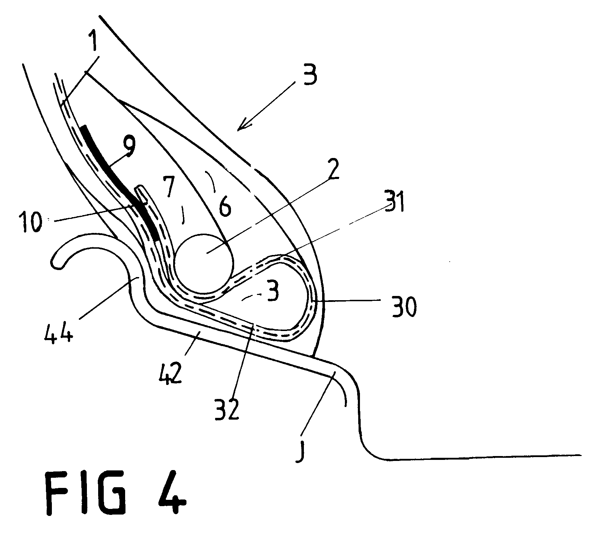

Sur la figure 4, est montré un ensemble formé par un pneumatique conforme à l'invention, monté sur sa jante de service. Ladite jante J est une jante monobloc comportant des sièges de jante (42), inclinés par rapport à la direction de l'axe de rotation de l'ensemble vers l'intérieur et faisant avec ladite direction un angle égal à 15° ± 1°, des rebords de jante courbes (44) axialement à l'extérieur desdits sièges et une gorge de montage, selon les normes en vigueur. Dans chaque bourrelet B du pneumatique, le retournement (10) de l'armature de carcasse (1) entoure, en allant du talon à la pointe du bourrelet, le profilé (3) dans sa totalité, l'extrémité du retournement (10) se trouvant radialement au dessus de la tringle métallique (2). Comme dans le cas de la figure 2, le retournement (10) forme premièrement le côté radialement intérieur (32) du profilé (3), deuxièmement le côté latéral (30) axialement à l'intérieur dudit profilé puis dernièrement le côté radialement à l'extérieur (31) du même profilé, pour s'enrouler de nouveau autour de la tringle (2), ce profil de retournement permettant d'avoir l'extrémité dudit retournement axialement à l'intérieur du profil méridien de l'armature de carcasse et ainsi d'améliorer l'endurance à la fatigue de bourrelets. Ladite endurance peut être encore être améliorée par la présence entre l'armature de carcasse et son retournement d'une armature de renforcement additionnelle (9), formée de câbles, textiles ou métalliques, orientés par rapport à la direction circonférentielle d'un angle faible, pouvant être compris entre 0° et 45°.

L'ensemble pneumatique-jante peut de manière avantageuse comprendre une jante J ayant d'une part un premier siège (42'), comme défini ci-dessus, et dit incliné vers l'extérieur et d'autre part un deuxième siège (42'') dit incliné vers l'intérieur, le pneumatique dudit ensemble comprenant de manière évidente des bourrelets de forme adaptée à la forme des sièges de jante (42') et (42''). Les deux sièges peuvent alors avoir des diamètres égaux ou des diamètres inégaux.

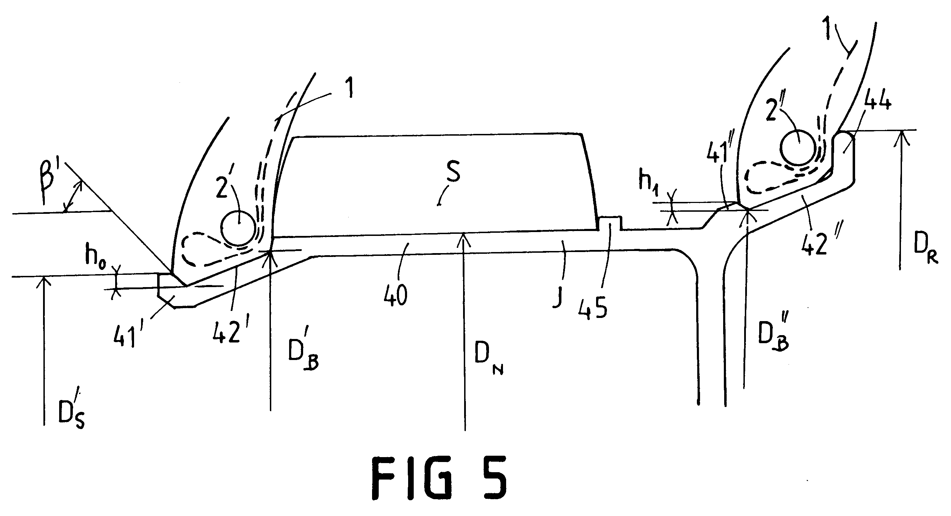

La jante J, qui forme avec un pneumatique, conforme à l'invention, l'ensemble montré sur la figure 5, est une jante telle que, par exemple, décrite dans la demande française non publiée 93/14703, et plus précisément dans le passage de la description de ladite demande relative à la figure 3 du dessin annexé. La jante J comprend un premier siège de jante (42'), dont l'extrémité axialement extérieure est sur un cercle de diamètre inférieur au diamètre du cercle sur lequel se trouve l'extrémité axialement intérieure, et un deuxième siège de jante (42'') dont l'extrémité axialement extérieure se trouve sur un cercle de diamètre supérieur au diamètre sur lequel se trouve l'extrémité axialement intérieure. Les deux sièges (42') et (42'') ont des génératrices tronconiques faisant avec l'axe de rotation un angle, identique pour les deux génératrices et égal à 6°. Le premier siège (42') est prolongé axialement à l'extérieur par une saillie ou hump (41') de faible hauteur h₀, égale à 3,5 mm et ayant une paroi intérieure tronconique faisant avec l'axe de rotation de la jante un angle β', égal à 45°. Axialement à l'intérieur, le premier siège de jante (42') est réuni à un fond de jante (40),par l'intermédiaire d'une génératrice tronconique, le diamètre D_{N} dudit fond de jante cylindrique étant légèrement supérieur au diamètre D'_{B} de l'extrémité axialement intérieure du siège (42'), diamètre lui-même supérieur au diamètre D'_{S} de la saillie extérieure (41'). Le deuxième siège de jante (42'') est prolongé axialement à l'extérieur par un rebord de jante (44), ayant une paroi intérieure perpendiculaire à l'axe de rotation et ayant une extrémité radialement extérieure dont le diamètre D_{R} est le diamètre maximum de la jante. Axialement à l'intérieur, le deuxième siège de jante (42'') est prolongé par une protubérance (41''), dont la hauteur h₁ est semblable à la hauteur des saillies ou humps normalement utilisées sur les jantes actuelles et normalisées. Les deux sièges de jante (42') et (42''), dissymétriques par les sens d'inclinaison de leurs génératrices, le sont aussi par leurs diamètres, le diamètre D''_{B} de l'extrémité axialement intérieure du deuxième siège de jante (42'') étant supérieure au diamètre D'_{B} de l'extrémité axialement intérieure du premier siège de jante (42'). L'ensemble est complété par un appui de soutien de bande de roulement S, maintenu en position axiale, d'une part par un des bourrelets B du pneumatique monté sur sa jante J et d'autre part par une protubérance (45) disposée sur le fond de jante (40),la face latérale de l'appui de soutien étant considérée comme l'équivalente de la paroi d'un rebord de jante axialement à l'intérieur du siège de jante. Les bourrelets B du pneumatique sont alors adaptés à une telle configuration de jante : dans le bourrelet (B) destiné à être monté sur le premier siège de jante (42'), l'armature de carcasse (1) est enroulée autour de la tringle enrobée (2'), conformément à l'invention, en allant axialement de l'intérieur à l'extérieur puisque, dans ce bourrelet, le talon est à l'intérieur, la paroi du rebord de jante étant avantageusement remplacée par la paroi équivalente de l'appui de soutien S ; dans le bourrelet (B) destiné à être monté sur le deuxième siège de jante (42''), l'armature de carcasse (1) est enroulée autour de la tringle enrobée (2'') en allant de l'extérieur à l'intérieur puisque le talon dudit bourrelet est alors axialement à l'extérieur.

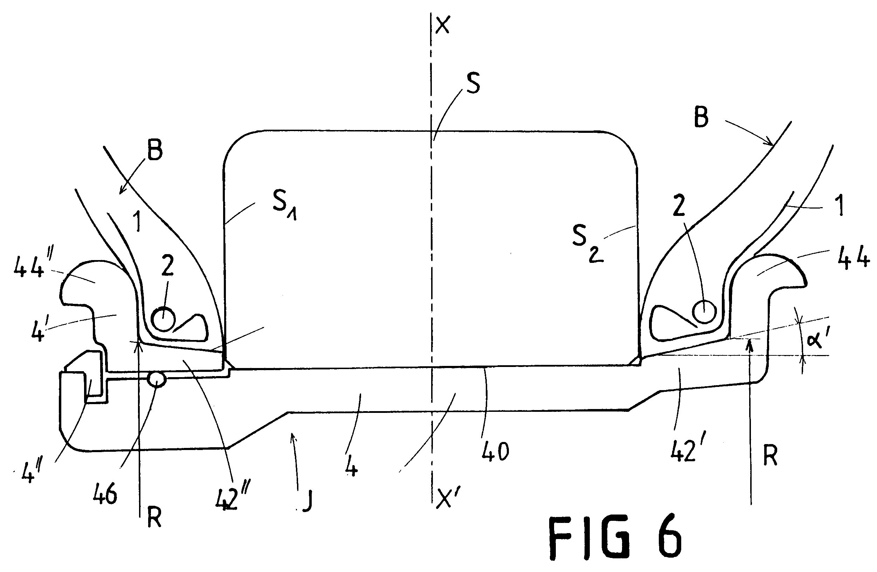

Sur la figure 6 est montré un autre exemple d'ensemble composé d'un pneumatique conforme à l'invention, d'une jante J et d'un appui de soutien S. Ladite jante J comprend trois pièces métalliques : une première pièce (4) constituée principalement du fond de jante (40) réuni, d'un côté à un premier siège de jante (42') et axialement à l'extérieur à un rebord de jante (44') solidaire du siège (42'), et comprenant de l'autre côté la partie destinée à recevoir la deuxième pièce métallique (4') de la jante J. Ladite pièce (4') démontable est constituée d'un siège de jante (42'') et d'un rebord de jante (44''). La troisième pièce est l'anneau de verrouillage (4''). Les sièges de jante (42') et (42'') ont respectivement des génératrices symétriques par rapport au plan équatorial de l'ensemble, et tronconiques en faisant avec la direction de l'axe de rotation un angle α' ouvert radialement et axialement vers l'extérieur égal à 5°. Les deux rebords de jante (44') et (44'') étant axialement à l'extérieur des deux sièges de jante (42') et (42''), l'armature de carcasse (1), dans chaque bourrelet B, s'enroule autour de la tringle (2) en allant de l'extérieur à l'intérieur pour revenir ensuite sous la tringle (2), après avoir entouré, comme dans les exemples déjà décrits, un profilé (3) de mélange caoutchouteux sous forme de coin. L'ensemble est avantageusement complété dans cet exemple par un appui de soutien S dont la section méridienne est sensiblement rectangulaire et dont la face radialement intérieure repose sur la face cylindrique du fond de jante (40). Les côtés latéraux S₁ et S₂, distants axialement de la largeur axiale maximale de l'appui S, sont en contact avec les parois axialement intérieures des pointes des bourrelets B, et évitent ainsi le déplacement axial des bourrelets B du pneumatique vers l'intérieur dans le cas d'un roulage à pression faible ou nulle.

Dans l'exemple décrit ci-dessus et montré sur la figure 6, il est nécessaire de placer entre la face cylindrique radialement intérieure du siège de jante (42'') mobile et la face radialement extérieure de la partie du fond de jante (40) correspondante, un joint d'étanchéité (46) en caoutchouc vulcanisé, ce joint étant placé dans les demi-gorges prévues à cet effet.

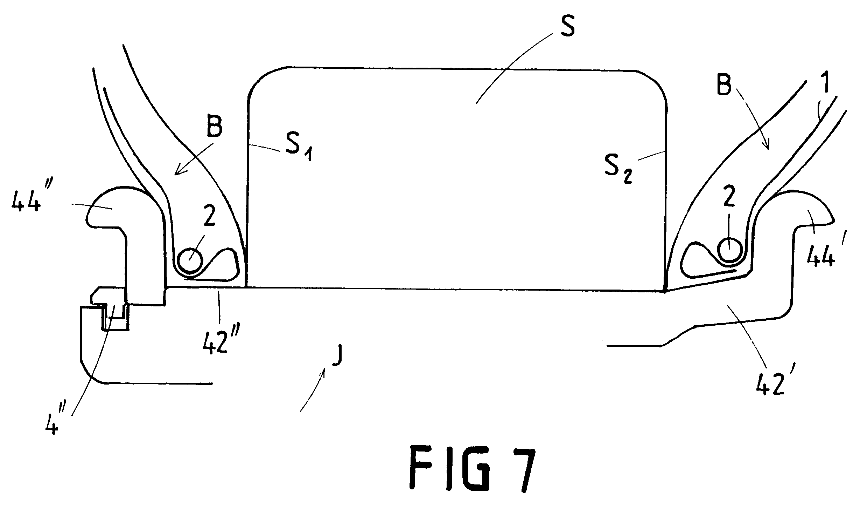

L'exemple montré sur la figure 7 diffère de celui de la figure 6 par les caractéristiques suivantes : le joint d'étanchéité est supprimé, le siège de jante (42'') ne fait plus partie de la pièce mobile située du côté, par exemple, extérieur de l'ensemble, la génératrice dudit siège (42'') étant devenue parallèle à l'axe de rotation et ledit siège (42'') pouvant alors faire partie intégrante du fond de jante (40), le rebord de jante (44'') restant seul mobile. La jante est devenue asymétrique du fait que son siège de jante (42') a une génératrice tronconique et que son siège de jante (42'') a une génératrice parallèle à l'axe de rotation.

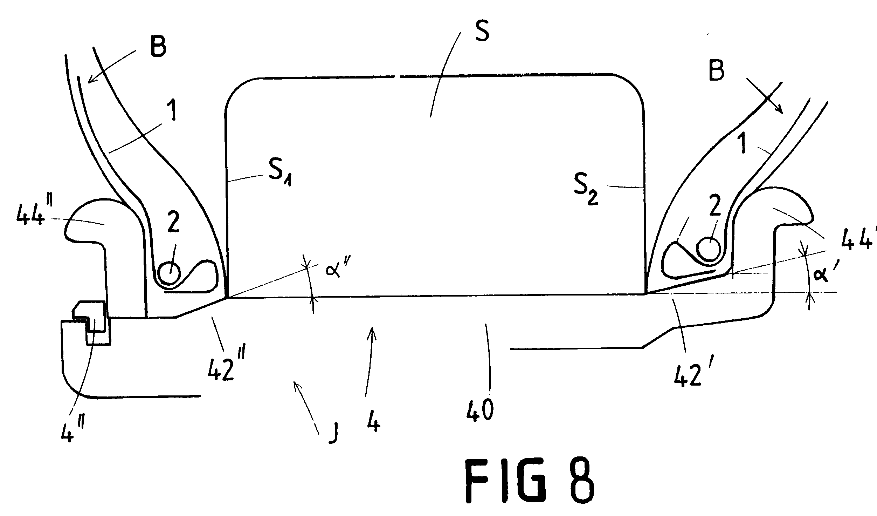

L'exemple montré sur la figure 8 accentue cette asymétrie, en ce sens que le siège de jante (42''), toujours partie intégrante du fond de jante (40) a une génératrice formée d'une portion tronconique axialement à l'intérieur et sur au moins 75% de la largeur axiale du siège, dont l'angle α'', avec la direction parallèle à l'axe de rotation, est égal à 5° mais ouvert radialement vers l'extérieur et axialement vers l'intérieur, ladite portion tronconique étant prolongée axialement à l'extérieur par une génératrice cylindrique. Dans cet exemple comme dans l'exemple précédent, le siège de jante (42') conserve une génératrice tronconique faisant avec la direction parallèle à l'axe de rotation un angle α' égal à 5° et ouvert radialement et axialement vers l'extérieur. Comme dans les exemples montrés sur les figures 6 et 7, l'armature de carcasse (1) s'enroule dans chaque bourrelet B autour de la tringle (2) en allant du talon à la pointe dudit bourrelet, puis entourer dans sa totalité le profilé (3) de mélange caoutchouteux disposé axialement à l'intérieur de la tringle (2).

## Revendications

1. Pneumatique à armature de carcasse radiale (1), enroulée dans chaque bourrelet B à au moins une tringle (2) pour former un retournement (10), la face radialement intérieure dudit bourrelet étant sensiblement dimensionnellement identique à la face du siège de la jante J de montage, caractérisé en ce que, monté sur jante et gonflé à sa pression de service, son armature de carcasse (1), vue en section méridienne, est enroulée dans au moins un bourrelet B autour de la tringle (2) enrobée de mélange caoutchouteux, en allant du talon à la pointe dudit bourrelet B, le retournement (10) s'étendant dans un profilé (3) de mélange caoutchouteux sous forme de coin délimité par deux côtés (31) et (32) issus d'un sommet A localisé sous la section de la tringle enrobée (2), le côté radialement externe (31) faisant, avec une parallèle avec l'axe de rotation passant par ledit sommet A, un angle ø₁ aigu, ouvert radialement vers l'extérieur, et le côté radialement interne (32) faisant avec ladite parallèle un angle ø₂ aigu, ouvert radialement vers l'intérieur, le mélange caoutchouteux formant le profilé (3), axialement adjacent à la tringle, ayant une dureté Shore A supérieure à la (aux) dureté(s) Shore A des mélanges caoutchouteux axialement et radialement au dessus de la tringle (2) et du profilé (3).

2. Pneumatique selon la revendication 1, caractérisé en ce que l'angle ø₁ est compris entre 20° et 70°, alors que l'angle ø₂ est compris entre 0° et 30°.

3. Pneumatique selon l'une des revendications 1 ou 2, caractérisé en ce que le mélange caoutchouteux formant le profilé (3), axialement adjacent à la tringle, a une dureté Shore A au moins égale à 65.

4. Pneumatique selon l'une des revendications 1 à 3, caractérisé en ce que la tringle (2) renforçant le bourrelet B est surmontée radialement à l'extérieur d'un profilé (7) sensiblement triangulaire en mélange caoutchouteux présentant une dureté Shore A inférieure à 50, l'espace, d'une part axialement adjacent au profilé (7), d'autre part radialement adjacent au profilé (3) axialement à côté de la tringle (2), étant comblé par un troisième profilé (6) de mélange caoutchouteux sensiblement de forme triangulaire, ledit mélange présentant aussi une dureté Shore inférieure à 50.

5. Pneumatique selon l'une des revendications 1 à 4, caractérisé en ce que la tringle enrobée (2), présentant en section méridienne une section sensiblement circulaire, est avantageusement susceptible d'être animée d'une rotation autour de son axe moyen.

6. Pneumatique selon la revendication 5, caractérisé en ce que la tringle enrobée (2) est une tringle rigide en torsion enrobée d'une mince couche de mélange caoutchouteux vulcanisé ayant une dureté Shore A au plus égale à 35.

7. Pneumatique selon la revendication 5, caractérisé en ce que la tringle enrobée (2) est une tringle de type "tressé", c'est-à-dire une tringle formée d'une âme autour de laquelle sont enroulés un(des) fil(s) ou câble(s) sur une ou plusieurs couches.

8. Pneumatique selon l'une des revendications 1 à 7, caractérisé en ce que le retournement (10) d'armature de carcasse (1) est sensiblement rectiligne, a une longueur sensiblement égale à la longueur des côtés (31) et (32) du profilé (3) de caoutchouc, et forme le côté radialement interne (32) du profilé (3) de caoutchouc.

9. Pneumatique selon l'une des revendications 1 à 7, caractérisé en ce que le retournement (10) d'armature de carcasse (1) est sensiblement rectiligne, a une longueur sensiblement égale à la longueur des côtés (31) et (32) du profilé (3) de caoutchouc, et forme le côté radialement externe (32) du profilé (3).

10. Pneumatique selon l'une des revendications 1 à 7, caractérisé en ce que le retournement (10) d'armature de carcasse (1) a une longueur telle qu'il est en contact avec le périmètre total du profilé (3) et forme ainsi les deux côtés radialement externe et interne (31) et (32) du profilé (3) de caoutchouc ainsi que le côté (30) opposé au sommet A ou centre dudit profilé (3), l'extrémité dudit retournement (10) étant située axialement au delà du point d'intersection A des deux côtés externe et interne (31) et (32).

11. Pneumatique selon la revendication 10, caractérisé en ce que l'extrémité du retournement (10) d'armature de carcasse (1) est radialement plus éloignée de l'axe de rotation que le centre de gravité de la section de la tringle enrobée (2).

12. Pneumatique selon l'une des revendications 1 à 11, caractérisé en ce qu'il comprend au moins un premier bourrelet B, dont le siège est incliné vers l'extérieur, le talon de bourrelet étant axialement à l'intérieur alors que la pointe de bourrelet est axialement à l'extérieur et l'armature de carcasse (1) s'enroulant autour de la tringle (2) en allant de l'intérieur à l'extérieur.

13. Pneumatique selon l'une des revendications 1 à 11, caractérisé en ce qu'il comprend au moins un premier bourrelet B, dont le siège est incliné vers l'intérieur, le talon de bourrelet étant axialement à l'extérieur alors que la pointe de bourrelet est axialement à l'intérieur et l'armature de carcasse (1) s'enroulant autour de la tringle (2) en allant de l'extérieur à l'intérieur.

14. Pneumatique selon l'une des revendications 1 à 11, caractérisé en ce qu'il comprend au moins un premier bourrelet B, dont le siège a une génératrice parallèle à l'axe de rotation, le talon du bourrelet étant axialement à l'extérieur et la pointe de bourrelet étant axialement à l'intérieur et l'armature de carcasse (1) s'enroulant autour de la tringle (2) en allant de l'extérieur à l'intérieur.

15. Pneumatique selon l'une des revendications 1 à 11, caractérisé en ce qu'il comprend au moins un premier bourrelet B, dont le siège est incliné vers l'extérieur sur au moins 75% de sa largeur axiale, le talon de bourrelet étant axialement à l'extérieur alors que la pointe de bourrelet est axialement à l'intérieur et l'armature de carcasse (1) s'enroulant autour de la tringle (2) en allant de l'extérieur à l'intérieur.

16. Pneumatique selon la revendication 12, caractérisé en ce qu'il comprend un deuxième bourrelet B symétrique, par rapport au plan équatorial du pneumatique, du premier bourrelet.

17. Pneumatique selon la revendication 12, caractérisé en ce qu'il comprend un deuxième bourrelet B dont le siège est incliné vers l'intérieur, le talon de bourrelet étant axialement à l'extérieur alors que la pointe de bourrelet est axialement à l'intérieur et l'armature de carcasse (1) s'enroulant autour de la tringle (2) en allant de l'extérieur à l'intérieur.

18. Pneumatique selon la revendication 13, caractérisé en ce qu'il comprend un deuxième bourrelet B symétrique, par rapport au plan équatorial du pneumatique, du premier bourrelet.

19. Pneumatique selon la revendication 13, caractérisé en ce qu'il comprend un deuxième bourrelet B dont le siège a une génératrice parallèle à l'axe de rotation, le talon de ce deuxième bourrelet étant axialement à l'extérieur et la pointe de bourrelet étant axialement à l'intérieur, l'armature de carcasse (1) s'enroulant autour de la tringle (2) en allant de l'extérieur à l'intérieur.

20. Pneumatique selon la revendication 13, caractérisé en ce qu'il comprend un deuxième bourrelet B dont le siège est incliné vers l'extérieur, le talon de ce deuxième bourrelet étant axialement à l'extérieur alors que la pointe de bourrelet est axialement à l'intérieur, et l'armature de carcasse (1) s'enroulant autour de la tringle (2) en allant de l'extérieur à l'intérieur.

21. Ensemble formé d'un pneumatique selon la revendication 16, d'une jante J comprenant un premier siège (42) de jante incliné vers l'extérieur, ledit siège étant prolongé axialement à l'intérieur par un rebord de jante (44) et axialement à l'extérieur par une saillie ou hump (41) de faible hauteur, et un deuxième siège de jante (42) incliné vers l'extérieur, ledit deuxième siège étant prolongé axialement par un fond de jante (40) sur lequel est posé un appui de soutien de bande de roulement dont une face latérale est utilisée comme rebord de jante et axialement à l'extérieur par une saillie ou hump (41).

22. Ensemble formé d'un pneumatique selon la revendication 17, d'une jante J comprenant un premier siège de jante (42') incliné vers l'extérieur, ledit siège étant prolongé axialement à l'intérieur par un fond de jante (40) sur lequel est posé un appui de soutien S de bande de roulement dont une face latérale est utilisée comme rebord de jante et axialement à l'extérieur par une saillie ou hump (41'), un deuxième siège de jante (42'') incliné vers l'intérieur, ledit deuxième siège de jante étant prolongé axialement à l'extérieur par un rebord de jante (44) et axialement à l'intérieur par une saillie ou hump (41'') de faible hauteur.

23. Ensemble formé d'un pneumatique selon la revendication 18, d'une jante J formée de trois pièces dont deux au moins sont amovibles et comprenant deux sièges de jante (42', 42'') inclinés vers l'intérieur et d'un appui de soutien S de bande de roulement dont la largeur axiale est sensiblement égale à la distance axiale séparant les deux bourrelets B du pneumatique.

24. Ensemble formé d'un pneumatique selon la revendication 19, d'une jante J composée de trois pièces dont deux au moins sont amovibles, comprenant un premier siège de jante (42') incliné vers l'intérieur, ledit siège étant prolongé axialement à l'extérieur par un rebord de jante (44') et un deuxième siège de jante (42'') dont la génératrice est parallèle à l'axe de rotation, ledit deuxième siège étant prolongé axialement par un deuxième rebord de jante (44''), et d'un appui de soutien S de bande de roulement dont la largeur axiale est sensiblement égale à la distance axiale séparant les deux bourrelets B du pneumatique.

25. Ensemble formé d'un pneumatique selon la revendication 20, d'une jante J composée de trois pièces dont deux au moins sont amovibles, comprenant un premier siège de jante (42') incliné vers l'intérieur, ledit siège étant prolongé axialement à l'extérieur par un rebord de jante (44') et un deuxième siège de jante (42'') incliné vers l'extérieur sur au moins 75% de sa largeur axiale, ledit deuxième siège de jante étant prolongé axialement à l'extérieur par un rebord de jante (44''), et d'un appui de soutien S de bande de roulement dont la largeur axiale est sensiblement égale à la distance axiale séparant les deux bourrelets B du pneumatique.

## Claims

1. A tyre with radial carcass reinforcement (1), wound in each bead B on at least one bead wire (2) to form an upturn (10), the radially inner face of said bead being substantially dimensionally identical to the face of the seat of the mounting rim J, characterised in that, when mounted on rim and inflated to its operating pressure, its carcass reinforcement (1), viewed in meridian section, is wound in at least one bead B about the bead wire (2) coated with rubber mix, passing from the heel to the toe of said bead B, the upturn (10) extending in a profile (3) made of rubber mix in the form of a wedge defined by two sides (31) and (32) coming from an apex A located beneath the section of the coated bead wire (2), the radially outer side (31) forming, with a line parallel to the axis of rotation passing through said apex A, an acute angle φ₁ open radially towards the outside, and the radially inner side (32) forming with said parallel line an acute angle φ₂, open radially towards the inside, the rubber mix forming the profile (3), axially adjacent to the bead wire, having a Shore A hardness greater than the Shore A hardness(es) of the rubber mixes located axially and radially above the bead wire (2) and the profile (3).

2. A tyre according to Claim 1, characterised in that the angle φ₁ is between 20° and 70°, whereas the angle φ₂ is between 0° and 30°.

3. A tyre according to one of Claims 1 or 2, characterised in that the rubber mix forming the profile (3), axially adjacent to the bead wire, has a Shore A hardness of at least 65.

4. A tyre according to one of Claims 1 to 3, characterised in that the bead wire (2) reinforcing the bead B is surmounted radially on the outside by a substantially triangular profile (7) made of a rubber mix having a Shore A hardness of less than 50, the space, firstly axially adjacent to the profile (7), and secondly radially adjacent to the profile (3) axially next to the bead wire (2), being filled by a third profile (6) of rubber mix substantially of triangular shape, said mix also having a Shore hardness of less than 50.

5. A tyre according to one of Claims 1 to 4, characterised in that the coated bead wire (2), which has in meridian section a substantially circular section, is advantageously capable of being moved in rotation about its mean axis.

6. A tyre according to Claim 5, characterised in that the coated bead wire (2) is a bead wire which is rigid in torsion, coated with a thin layer of vulcanised rubber mix having a Shore A hardness of at most 35.

7. A tyre according to Claim 5, characterised in that the coated bead wire (2) is a bead wire of "braided" type, that is to say a bead wire formed of a core around which are wound one or several cord(s) or cable(s) on one or more layers.

8. A tyre according to one of Claims 1 to 7, characterised in that the carcass reinforcement (1) upturn (10) is substantially rectilinear, has a length substantially equal to the length of the sides (31) and (32) of the rubber profile (3), and forms the radially inner side (32) of the rubber profile (3).

9. A tyre according to one of Claims 1 to 7, characterised in that the carcass reinforcement (1) upturn (10) is substantially rectilinear, has a length substantially equal to the length of the sides (31) and (32) of the rubber profile (3), and forms the radially outer side (32) of the profile (3).

10. A tyre according to one of Claims 1 to 7, characterised in that the carcass reinforcement (1) upturn (10) has a length such that it is in contact with the total perimeter of the profile (3) and thus forms the two radially outer and inner sides (31) and (32) of the rubber profile (3) and also the side (30) opposite the apex A or centre of said profile (3), the end of said upturn (10) being located axially beyond the point of intersection A of the two outer and inner sides (31) and (32).

11. A tyre according to Claim 10, characterised in that the end of the carcass reinforcement (1) upturn (10) is radially further from the axis of rotation than the centre of gravity of the section of the coated bead wire (2).

12. A tyre according to one of Claims 1 to 11, characterised in that it comprises at least one first bead B, the seat of which is inclined towards the outside, the heel of the bead being axially on the inside, whereas the toe of the bead is axially on the outside, and the carcass reinforcement (1) winding around the bead wire (2), passing from the inside to the outside.

13. A tyre according to one of Claims 1 to 11, characterised in that it comprises at least one first bead B, the seat of which is inclined towards the inside, the heel of the bead being axially on the outside, whereas the toe of the bead is axially on the inside, and the carcass reinforcement (1) winding around the bead wire (2), passing from the outside to the inside.

14. A tyre according to one of Claims 1 to 11, characterised in that it comprises at least one first bead B, the seat of which has a generatrix parallel to the axis of rotation, the heel of the bead being axially on the outside and the toe of the bead being axially on the inside, and the carcass reinforcement (1) winding around the bead wire (2), passing from the outside to the inside.

15. A tyre according to one of Claims 1 to 11, characterised in that it comprises at least one first bead B, the seat of which is inclined towards the outside over at least 75% of its axial width, the heel of the bead being axially on the outside whereas the toe of the bead is axially on the inside, and the carcass reinforcement (1) winding around the bead wire (2), passing from the outside to the inside.

16. A tyre according to Claim 12, characterised in that it comprises a second bead B, symmetrical to the first bead with respect to the equatorial plane of the tyre.

17. A tyre according to Claim 12, characterised in that it comprises a second bead B, the seat of which is inclined towards the inside, the heel of the bead being axially on the outside, whereas the toe of the bead is axially on the inside, and the carcass reinforcement (1) winding around the bead wire (2), passing from the outside to the inside.

18. A tyre according to Claim 13, characterised in that it comprises a second bead B, symmetrical to the first bead with respect to the equatorial plane of the tyre.

19. A tyre according to Claim 13, characterised in that it comprises a second bead B, the seat of which has a generatrix parallel to the axis of rotation, the heel of this second bead being axially on the outside and the toe of the bead being axially on the inside, the carcass reinforcement (1) winding around the bead wire (2), passing from the outside to the inside.

20. A tyre according to Claim 13, characterised in that it comprises a second bead B, the seat of which is inclined towards the outside, the heel of this second bead being axially on the outside, whereas the toe of the bead is axially on the inside, and the carcass reinforcement (1) winding around the bead wire (2), passing from the outside to the inside.

21. An assembly formed of a tyre according to Claim 16, a rim J comprising a first rim seat (42) inclined towards the outside, said seat being extended axially on the inside by a rim flange (44) and axially on the outside by a protrusion or hump (41) of low height, and a second rim seat (42) inclined towards the outside, said second seat being extended axially by a rim base (40) on which a bearing support for the tread is placed, one lateral face of which is used as the rim flange, and axially on the outside by a protrusion or hump (41).

22. An assembly formed of a tyre according to Claim 17, a rim J comprising a first rim seat (42') inclined towards the outside, said seat being extended axially on the inside by a rim base (40) on which a bearing support S for the tread is placed, one lateral face of which is used as the rim flange, and axially on the outside by a protrusion or hump (41'), a second rim seat (42'') inclined towards the inside, said second rim seat being extended axially on the outside by a rim flange (44) and axially on the inside by a protrusion or hump (41'') of low height.

23. An assembly formed of a tyre according to Claim 18, a rim J formed of three parts, at least two of which are removable, and comprising two rim seats (42', 42'') inclined towards the inside and a bearing support S for the tread, the axial width of which is substantially equal to the axial distance between the two beads B of the tyre.

24. An assembly formed of a tyre according to Claim 19, a rim J formed of three parts, at least two of which are removable, comprising a first rim seat (42') inclined towards the inside, said seat being extended axially on the outside by a rim flange (44'), and a second rim seat (42''), the generatrix of which is parallel to the axis of rotation, said second seat being extended axially by a second rim flange (44''), and a bearing support S for the tread, the axial width of which is substantially equal to the axial distance between the two beads B of the tyre.

25. An assembly formed of a tyre according to Claim 20, a rim J formed of three parts, at least two of which are removable, comprising a first rim seat (42') inclined towards the inside, said seat being extended axially on the outside by a rim flange (44'), and a second rim seat (42'') inclined towards the outside over at least 75% of its axial width, said second rim seat being extended axially on the outside by a rim flange (44''), and a bearing support S for the tread, the axial width of which is substantially equal to the axial distance between the two beads B of the tyre.

## Patentansprüche

1. Reifen mit radialer Karkassenbewehrung (1), die in jedem Wulst B mit mindestens einem Wulstkern (2) herumgewickelt ist, um einen Umschlag (10) zu bilden, wobei die radial innenliegende Fläche des genannten Wulstes im wesentlichen der Dimension nach identisch mit der Fläche des Sitzes der Montagefelge J ist,
**dadurch gekennzeichnet, daß,**
wenn er auf seiner Felge montiert ist und auf seinen Betriebsdruck aufgepumpt ist, seine Karkassenbewehrung (1), im Meridianschnitt gesehen, in mindestens einem Wulst B rund um den Wulstkern (2) herumgewickelt ist, der mit einer gummiartigen Mischung umhüllt ist, wobei man von der Flanke bis zur Spitze des genannten Wulstes B fortschreitet, wobei sich der Umschlag (10) in einem Profil (3) aus gummiartiger Mischung in Form eines Keiles erstreckt, der durch zwei Seiten (31) und (32) begrenzt ist, die von einem Scheitel A ausgehen, der unter dem Querschnitt des umhüllten Wulstkernes (2) angeordnet ist, wobei die radial außenliegende Seite (31) mit einer Parallele zur Drehachse, die durch den genannten Scheitel A hindurchläuft, einen spitzen Winkel φ₁, bildet, der radial nach außen offen ist, und die radial innenliegende Seite (32) zur genannten Parallelen einen spitzen Winkel φ₂ bildet, der radial nach innen offen ist, und wobei die kautschukartige Mischung, die das Profil (3) axial neben dem Wulstkern bildet, eine Shorehärte A aufweist, die größer ist als die Shorehärte(n) A der gummiartigen Mischungen axial und radial über dem Wulstkern (2) und dem Profil (3).

2. Reifen nach Anspruch 1, dadurch gekennzeichnet, daß der Winkel φ₁, zwischen 20° und 70° liegt, und dann der Winkel φ₂ zwischen 0° und 30° liegt.

3. Reifen nach einem der Ansprüche 1 oder 2, dadurch gekennzeichnet, daß die gummiartige Mischung, die das Profil (3) axial neben dem Wulstkern bildet, eine Shorehärte A aufweist, die mindestens 65 beträgt.

4. Reifen nach einem der Ansprüche 1 bis 3, dadurch gekennzeichnet, daß radial an der Außenseite über dem Wulstkern (2), der den Wulst B verstärkt, ein im wesentlichen dreieckiges Profil (7) aus gummiartiger Mischung angebracht ist, das eine Shorehärte A aufweist, die kleiner als 50 ist, wobei der Raum einerseits axial neben dem Profil (7) und andererseits radial neben dem Profil (3) axial an der Seite des Wulstkerns (2) von einem dritten Profil (6) aus gummiartiger Mischung ausgefüllt ist, das im wesentlichen dreieckig ist, wobei die genannte Mischung ebenfalls eine Shorehärte kleiner als 50 aufweist.

5. Reifen nach einem der Ansprüche 1 bis 4, dadurch gekennzeichnet, daß der umhüllte Wulstkern (2), der im Meridianschnitt einen im wesentlichen kreisförmigen Querschnitt aufweist, vorteilhafterweise imstande ist, zu einer Drehung um seine Mittelachse angeregt zu werden.

6. Reifen nach Anspruch 5, dadurch gekennzeichnet, daß der umhüllte Wulstkern (2) ein torsionssteifer Wulstkern ist, der mit einer dünnen Lage aus kautschukartiger, vulkanisierter Mischung umhüllt ist, die eine Shorehärte A aufweist, die höchstens 35 beträgt.

7. Reifen nach Anspruch 5, dadurch gekennzeichnet, daß der umhüllte Wulstkern (2) der Art nach ein "geflochtener" Wulstkern ist, d.h. ein Wulstkern, der von einer Seele gebildet ist, um welche ein Draht bzw. Drähte oder Seil bzw. Seile in einer oder mehreren Lagen herumgewickelt ist bzw. sind.

8. Reifen nach einem der Ansprüche 1 bis 7, dadurch gekennzeichnet, daß der Umschlag (10) der Karkassenbewehrung (1) im wesentlichen geradlinig ist, eine Länge aufweist, die im wesentlichen gleich ist der Länge der Seiten (31) und (32) des Gummiprofils (3), und die radial innenliegende Seite (32) des Gummiprofils (3) bildet.

9. Reifen nach einem der Ansprüche 1 bis 7, dadurch gekennzeichnet, daß der Umschlag (10) der Karkassenbewehrung (1) im wesentlichen geradlinig ist, eine Länge aufweist, die im wesentlichen gleich ist der Länge der Seiten (31) und (32) des Gummiprofils (3), und die radial außenliegende Seite (32) des Profils (3) bildet.

10. Reifen nach einem der Ansprüche 1 bis 7, dadurch gekennzeichnet, daß der Umschlag (10) der Karkassenbewehrung (1) eine solche Länge aufweist, daß er in Berührung mit dem gesamten Umfang des Profils (3) steht und somit die beiden Seiten bildet, nämlich die radial außenliegende und innenliegende (31) und (32), des Gummiprofils (3), sowie die Seite (30), die dem Scheitel A oder der Mitte des genannten Profils (3) gegenüberliegt, wobei das Ende des genannten Umschlags (10) axial jenseits des Schnittpunkts A der beiden Seiten, nämlich der Außenseite und Innenseite (31) und (32), liegt.

11. Reifen nach Anspruch 10, dadurch gekennzeichnet, daß das Ende des Umschlags (10) der Karkassenbewehrung (1) radial weiter von der Drehachse entfernt ist als der Schwerpunkt des Querschnitt des umhüllten Wulstkerns (2).

12. Reifen nach einem der Ansprüche 1 bis 11, dadurch gekennzeichnet, daß er mindestens einen ersten Wulst B aufweist, dessen Sitz nach außen geneigt ist, wobei die Flanke des Wulstes axial auf der Innenseite liegt, während die Spitze des Wulstes axial auf der Außenseite liegt, und die Karkassenbewehrung (1) sich um den Wulstkern (2) herumwickelt, indem sie von der Innenseite zur Außenseite verläuft.

13. Reifen nach einem der Ansprüche 1 bis 11, dadurch gekennzeichnet, daß er mindestens einen ersten Wulst B aufweist, dessen Sitz nach innen geneigt ist, wobei die Flanke des Wulstes axial auf der Außenseite liegt, während die Spitze des Wulstes axial auf der Innenseite liegt, und die Karkassenbewehrung (1) sich um den Wulstkern (2) herumwickelt, wobei sie von der Außenseite zur Innenseite verläuft.

14. Reifen nach einem der Ansprüche 1 bis 11, dadurch gekennzeichnet, daß er mindestens einen ersten Wulst B aufweist, dessen Sitz eine zur Drehachse parallele Erzeugende aufweist, wobei die Flanke des Wulstes axial auf der Außenseite liegt und die Spitze des Wulstes axial auf der Innenseite liegt, und die Karkassenbewehrung (1) sich um den Wulstkern (2) herumwickelt, während sie von der Außenseite zur Innenseite verläuft.

15. Reifen nach einem der Ansprüche 1 bis 11, dadurch gekennzeichnet, daß er mindestens einen ersten Wulst B aufweist, dessen Sitz nach außen über mindestens 75 % seiner axialen Breite geneigt ist, wobei die Flanke des Wulstes axial auf der Außenseite liegt, während die Spitze des Wulstes axial auf der Innenseite liegt, und die Karkassenbewehrung (1) sich um den Wulstkern (2) herumwickelt, während sie von der Außenseite zur Innensetiet verläuft.

16. Reifen nach Anspruch 12, dadurch gekennzeichnet, daß er einen zweiten Wulst B aufweist, der in Bezug auf die Äquatorialebene des Reifens zum ersten Wulst symmetrisch ist.

17. Reifen nach Anspruch 12, dadurch gekennzeichnet, daß er einen zweiten Wulst B aufweist, dessen Sitz nach innen geneigt ist, wobei die Flanke des Wulstes axial auf der Außenseite liegt, während die Spitze des Wulstes axial auf der Innenseite liegt, und die Karkassenbewehrung (1) sich um den Wulstkern (2) herumwickelt, während sie von der Außenseite zur Innenseite verläuft.

18. Reifen nach Anspruch 13, dadurch gekennzeichnet, daß er einen zweiten Wulst B aufweist, der in Bezug auf die Äquatorialebene des Reifens zum ersten Wulst symmetrisch ist.

19. Reifen nach Anspruch 13, dadurch gekennzeichnet, daß er einen zweiten Wulst B aufweist, dessen Sitz eine zur Drehachse parallele Erzeugende aufweist, wobei die Flanke dieses zweiten Wulstes sich axial an der Außenseite befindet und die Spitze des Wulstes sich axial an der Innenseite befindet, und die Karkassenbewehrung (1) sich um den Wulstkern (2) herumwickelt, während sie von der Außenseite zur Innenseite verläuft.

20. Reifen nach Anspruch 13, dadurch gekennzeichnet, daß er einen zweiten Wulst B aufweist, dessen Sitz nach außen geneigt ist, wobei die Flanke dieses zweiten Wulstes sich axial an der Außenseite befindet, während die Spitze des Wulstes sich axial an der Innenseite befindet, und die Karkassenbewehrung (1) sich um den Wulstkern (2) herumwickelt, während sie von der Außenseite zur Innenseite verläuft.

21. Baugruppe, die aus einem Reifen nach Anspruch 16 gebildet ist, mit einer Felge J, die einen ersten, nach außen geneigten Felgensitz (42) aufweist, wobei der genannte Sitz axial zur Innenseite um einen Felgenring (44) und axial zur Außenseite um einen Vorsprung oder Höcker (41) mit geringer Höhe verlängert ist, und einen zweiten, nach außen geneigten Felgensitz (42), wobei der genannte zweite Sitz axial durch einen Felgenboden (40) verlängert ist, auf dem eine Stützauflage für die Lauffläche aufgesetzt ist, von der eine Seite als Felgenring benutzt ist, und axial zur Außenseite durch einen Vorsprung oder Höcker (41).

22. Baugruppe, die aus einem Reifen nach Anspruch 17 gebildet ist, mit einer Felge J, die einen ersten, nach außen geneigten Felgensitz (42') aufweist, wobei die genannte Felge axial auf der Innenseite durch einen Felgenboden (40) verlängert ist, auf den eine Stützauflage S für die Lauffläche aufgelegt ist, deren eine Seitenfläche als Felgenring benutzt ist, und axial auf der Außenseite durch einen Vorsprung oder Höcker (41'), und mit einem zweiten Felgensitz (42''), der nach innen geneigt ist, wobei der genannte zweite Felgensitz axial zur Außenseite um einen Felgenring (44) und axial auf der Innenseite durch einen Vorsprung oder Höcker (41'') mit geringer Höhe verlängert ist.

23. Baugruppe, die aus einem Reifen nach Anspruch 18 gebildet ist, mit einer Felge J, die aus drei Teilen gebildet ist, von denen mindestens zwei abnehmbar sind und zwei Felgensitze (42', 42'') aufweisen, die nach innen geneigt sind, sowie eine Stützauflage S für die Lauffläche, deren axiale Breite im wesentlichen gleich ist dem axialen Abstand, der die beiden Wülste B des Reifens trennt.

24. Baugruppe, die aus einem Reifen nach Anspruch 19 gebildet ist, mit einer Felge J, die aus drei Teilen zusammengesetzt ist, von denen mindestens zwei abnehmbar sind, mit einem ersten Felgensitz (42'), der nach innen geneigt ist, wobei der genannte Sitz axial nach außen um einen Felgenring (44') verlängert ist, und einem zweiten Felgensitz (42''), dessen Erzeugende eine Paralle zur Drehachse ist, wobei der genannte zweite Felgensitz axial durch einen zweiten Felgenring (44'') verlängert ist, und mit einer Stützauflage S für die Lauffläche, deren axiale Breite im wesentlichen gleich ist dem axialen Abstand, der die beiden Wülste B des Reifens trennt.

25. Baugruppe, die aus einem Reifen nach Anspruch 20 gebildet ist, mit einer Felge J, die aus drei Teilen zusammengesetzt ist, von denen mindestens zwei abnehmbar sind, mit einem ersten Felgensitz (42'), der nach innen geneigt ist, wobei der genannte Sitz axial zur Außenseite um einen Felgenring (44') verlängert ist, und einem zweiten Felgensitz (42''), der nach außen über mindestens 75 % seiner axialen Breite geneigt ist, wobei der genannte zweite Felgensitz axial nach außen um einen Felgenring (44'') verlängert ist, und mit einer Stützauflage S für die Lauffläche, deren axiale Breite im wesentlichen gleich ist dem axialen Abstand, der die beiden Wülste B des Reifens trennt.
